# EUROPÄISCHE PATENTSCHRIFT

(11) **EP 1 386 573 B1**
(45) Veröffentlichungstag und Bekanntmachung des Hinweises auf die Patenterteilung: **14.07.2010**
(21) Anmeldenummer: 03015700.2
(22) Anmeldetag: 21.07.2003
(51) Int. Cl.: A47L 9/04

(54) **Reinigungsgerät mit einem Elektroantrieb**
Cleaning device with electric drive
Appareil de nettoyage avec un entraînement électrique

(30) Priorität: 01.08.2002 DE 10235123
(43) Veröffentlichungstag der Anmeldung: 04.02.2004
(73) Patentinhaber: Vorwerk & Co. Interholding GmbH, 42275 Wuppertal (DE)
(72) Erfinder: Schönhoff, Helmut,Dipl.-Ing., 42897 Remscheid (DE); Hannemann, Peter, 42279 Wuppertal (DE); Fatum, Klaus,Dipl.-Ing., 45355 Essen (DE); Varnhorst, Mathias,Dipl.-Ing., 42349 Wuppertal (DE)
(74) Vertreter: Müller, Enno

(56) Entgegenhaltungen:
- DE-A1- 19 731 272
- FR-A- 612 777
- FR-A- 626 484
- GB-A- 2 088 204
- US-A- 4 419 784

## Beschreibung

Die Erfindung betrifft ein unmittelbar mit der Hand zu führendes Reinigungsgerät mit einem Elektroantrieb, vorzugsweise Polsterreinigungsgerät, das mit einem Saugschlauch zu verbinden ist und in Erstreckungsrichtung des Saugschlauchs langgestreckt ausgebildet ist, wobei ein angetriebenes Reinigungselement sich in Längsrichtung des Gerätes erstreckt.

Derartige Reinigungsgeräte, insbesondere Polsterreinigungsgeräte sind bekannt, so bspw. aus der DE 197 31 272 A1. Diese sind anschließbar an einen Saugschlauch eines Staubsaugers, damit der durch das in dem Reinigungsgerät angeordnete und angetriebene Reinigungselement gelöste Staub/Schmutz über einen Saugluftstrom abtransportiert werden kann. Diesbezüglich sind auch Lösungen bekannt, bei welchen das Reinigungselement eine Bürstenleiste ist, welche über den Elektroantrieb wischerartig das Polster oder dergleichen bürstet, vgl. etwa GB 2 088 204 A. Zum Stand der Technik ist darüber hinaus auf die US 4,419,784 A zu verweisen.

Ausgehend von dem zunächst genannten Stand der Technik beschäftigt sich die Erfindung mit Aufgabe, ein Reinigungsgerät der genannten Art vorteilhaft weiterzubilden.

Diese Aufgabe ist beim Gegenstand des Anspruches 1 gelöst, wobei darauf abgestellt ist, dass das Reinigungsgerät eine Zweiteilung aufweist, wobei ein Teil (Motorteil) den Elektromotor mit einem Antriebszahnrad und das andere Teil ein hiervon abkuppelbares Vorsatzelement umfasst, in welchem sich das über ein Abtriebszahnrad antreibbare Reinigungselement befindet. Hierdurch ist zunächst ein modularer Aufbau des Reinigungsgerätes erreicht, mit einer definierten Schnittstelle zur Aufnahme auch verschiedener Funktionseinheiten (Vorsatzelement), insbesondere Einheiten zum Reinigen oder Polieren. Das Getriebe erstreckt sich hierbei über beide Geräteteile. In vorteilhafter Weise ist durch die erfindungsgemäße Zweiteilung auch der Wechsel eines abgenutzten Reinigungselementes erleichtert. Der modulare Aufbau erlaubt in einfachster Weise den Austausch des abkuppelbaren Vorsatzelementes. Der Benutzer kommt somit bei einem notwendigen Wechsel des Reinigungselementes nicht mit diesem direkt in Kontakt, was aus hygienischer Sicht auch nicht wünschenswert ist. Das Grundteil (Motorteil) stellt über das Antriebszahnrad Leistung zur Verfügung, welche Leistung je nach gewähltem Vorsatzelement unterschiedlich genutzt werden kann. In einer bevorzugten Ausbildung sind in dem abkuppelbaren Vorsatzelement zwei als rotierende Bürsten ausgebildete Reinigungselemente vorgesehen, die sich zueinander gegensinnig bewegen und über das Abtriebszahnrad angetrieben werden. Zufolge dieser erfindungsgemäßen Ausgestaltung ist ein verbessertes Reinigungsergebnis erzielt, da durch die gegenläufige Bewegung der rotierenden Bürsten der in dem Polster bzw. in dem Gewebe des Oberstoffes festsitzende Schmutz effektiv bearbeitet, entsprechend gelöst wird. Arbeiten die beiden rotierenden Bürsten mit Bezug auf die Bearbeitungsebene wie bevorzugt aufeinander zu, so ergibt sich weiterhin der vorteilhafte Effekt, dass der gelöste Schmutz/Staub über die rotierenden Bürsten nach innen in das Gerät und hiernach gegebenenfalls über den Saugschlauch abtransportiert wird. Durch die gegenläufige Drehbewegung der Bürsten ist auch handhabungstechnisch ein Vorteil erzielt, da hierdurch einer Eigenfortbewegung des Reinigungsgerätes bei Auflage auf dem zu reinigenden Polster oder dergleichen entgegengewirkt ist. Das Reinigungsgerät liegt demzufolge ohne übermäßige Kraftanstrengung gut und ruhig in der Hand.

Bevorzugt ist vorgesehen, dass die zwei Bürsten zueinander V-förmig angeordnet sind, was eine deltaförmige Grundrissgestaltung des Polsterreinigungsgerätes, insbesondere des abkuppelbaren Vorsatzelementes erlaubt. So ist in vorteilhafter Weise vorgesehen, dass die Bürsten zugeordnet dem vorderen freien Ende des Reinigungsgerätes näher zueinander liegen. Zufolge dessen ist die Reinigung in Ecken, insbesondere Polsterecken, durch eine angepasste Ausspitzung des Reinigungsgerätes erleichtert. Als vorteilhaft erweist sich weiter, dass die Bürsten freistehende, sich im Wesentlichen in Längsrichtung der Bürsten erstreckende Borstenreihen aufweisen und dass Hüllkreise der rotierenden Borstenreihen beider Bürsten sich überdecken. Diese Anordnung ergibt im Zusammenhang mit der gegensinnigen Drehbewegung der Bürsten eine optimale Bürstbearbeitung der zu reinigenden Oberfläche und darüber hinaus einen verbesserten Schmutzabtransport in Richtung auf das Innere des Reinigungsgerätes. Bezüglich der Borstenreihen kann es sich um solche handeln, welche sich über die Länge der Bürsten wendelförmig über den Umfang erstrecken, wobei weiter je Bürste zwei Bürstenreihen vorgesehen sein können, welche um 180° zueinander versetzt angeordnet sind. Der Antrieb der rotierenden Bürsten mittels des in dem Reinigungsgerät angeordneten Elektroantriebs kann auf unterschiedliche Art erfolgen, so bspw. über einen Reibradantrieb. Bevorzugt wird eine Ausgestaltung, bei welcher die Bürsten fußseitig, zugeordnet dem Elektroantrieb über Zahnräder miteinander kämmen, wobei weiter bevorzugt der Elektroantrieb nur auf eine der Bürsten unmittelbar einwirkt. Oberhalb der Bürsten und in Längsrichtung der Bürsten erstreckt sich ein im Bereich des freien Endes des Reinigungsgerätes mündender Saugkanal, welch letzterer strömungstechnisch verbunden ist mit einem Saugschlauch eines Staubsaugers, so dass neben der bürstenden Funktion auch eine Saugfunktion zum Abtransport des gelösten Schmutzes im Reinigungsgerät erreicht ist. So ist weiter vorgesehen, dass in dem freien Ende des Reinigungsgeräts jenseits der Bürsten eine nach unten geöffnete Saugöffnung ausgebildet ist, mittels welcher insbesondere in Verbindung mit der V-förmigen Anordnung der Bürsten und damit einhergehender V-förmiger Grundrissgestaltung des Gerätes eine Spitzenabsaugung für bspw. Eckbereiche erreicht ist. Der Saugkanal ist im Bereich der Bürsten verschließbar, so dass eine wahlweise Aktivierung einer spitzenseitigen Saugöffnung oder einer, den Bürsten zugeordnete Saugöffnung möglich ist. Darüber hinaus ist auch eine Kombination denkbar, bei welcher beide Saugöffnungen geöffnet oder auch geschlossen sind. Bevorzugt wird weiter, dass auf der Unterseite des Reinigungsgerätes zugeordnet zu den Bürsten eine oder mehrere Öffnungen ausgebildet sind, durch welche sich jedenfalls Borsten der Bürsten erstrecken und eine Absaugung ermöglicht ist. Zufolge dieser Ausgestaltung sind die Bürsten von einem Saugraum umgeben, dessen nach unten in Richtung auf die zu reinigende Oberfläche gerichtete Saugöffnung von den Borsten der Bürsten durchfahren wird. Als insbesondere handhabungstechnisch vorteilhaft erweist es sich weiter, dass das Reinigungsgerät insgesamt eine schuhartige Gestaltung aufweist. Diese ergonomisch vorteilhafte Gestaltung bietet auch eine gute Zugänglichkeit in Eckbereichen des zu reinigenden Polsters oder dergleichen. Der sich über das Reinigungsgerät erstreckende Saugkanal ist jedenfalls teilweise in dem Vorsatzelement ausgebildet. Bevorzugt wird eine Ausgestaltung, bei welcher der Saugkanal erst durch Anordnung des Vorsatzelementes an dem Motorteil gebildet wird. Beide Teile des Reinigungsgerätes weisen somit Teilabschnitte des Saugkanals auf. Zur Verstellung der Stellung der Saugöffnung des Saugkanals ist in dem Motorteil ein Verstellelement angeordnet, welches weiter bevorzugt sich in einem am Motorteil außen angeordneten Schieber zur handbetätigbaren Verlagerung des Verstellelementes fortsetzt. Als ergonomisch günstig erweist sich eine Anordnung des Schiebers, die eine Daumenbetätigung erlaubt. Zudem wird bevorzugt, dass das Vorsatzelement vom Motorteil werkzeuglos trennbar bzw. mit diesem verbindbar ist. So wird vorgeschlagen, dass das Motorteil und das Vorsatzelement miteinander rastverbunden sind, bspw. derart, dass das Motorteil Rastzungen aufweist, welche in entsprechend ausgeformte Rastausnehmungen des Vorsatzelementes rastend eintreten. Um Drehschwingungen des durch Antriebszahnrad des Motorteils und Abtriebszahnrad des Vorsatzelementes gebildeten Geche Drehschwingungen durch den Bürsteneingriff und durch ein ungleichmäßige Drehmoment des Elektroantriebs verursacht werden, dämpfen zu können, ist weiter vorgesehen, dass auf dem Abtriebszahnrad ein Reibrad angeordnet ist, zur zusätzlichen Zusammenwirkung mit dem Antriebszahnrad. Zufolge dieser erfindungsgemäßen Ausgestaltung kann auf eine Torsionskupplung zwischen Bürste und Abtriebszahnrad verzichtet werden. Bevorzugt wird diesbezüglich weiter, dass das Reibrad ein Schaumstoffteil ist. Alternativ kann das Reibrad auch ein Elastomerteil sein, weiter alternativ auch aus Gummi bestehen. Das Reibrad ist in Achsrichtung bspw. formschlüssig gehalten. Denkbar ist jedoch auch eine Ausgestaltung, bei welcher das Reibrad an dem einen Zahnrad, insbesondere am Abtriebszahnrad des Vorsatzelementes bzw. an der das Abtriebszahnrad tragenden Welle angespritzt ist. In vorteilhafter Weise ist die äußere Oberfläche des Reibrads eben und glatt. Diese Anordnung ist insbesondere dann von Vorteil, wenn zum Toleranzausgleich zwischen dem Antriebszahnrad des Motorteils und dem Abtriebszahnrad des Vorsatzelements eine federnde Vorspannung aufgebracht wird derart, dass der Abstand der An- und Antriebswellen federbar eingestellt ist.

Nachstehend ist die Erfindung anhand der beigefügten Zeichnungen, welche lediglich ein Ausführungsbeispiel darstellen, näher erläutert. Es zeigt:
- Fig. 1: ein Reinigungsgerät der in Rede stehenden Art in Form eines Pols- terreinigungsgerätes in einer Seitenansicht;
- Fig. 2: die Unteransicht des Reinigungsgerätes;
- Fig. 3: eine perspektivische Darstellung des Reinigungsgerätes bei teilweise abgeschwenktem, von einem Motorteil lösbaren Vorsatzelement;
- Fig. 4: eine weitere perspektivische Darstellung, die Anordnung gemäß Fig. 3 betreffend;
- Fig. 5: das Motorteil und das Vorsatzelement in einzelnen perspektivischen Darstellungen;
- Fig. 6: die Unteransicht gegen das Motorteil;
- Fig. 7: eine perspektivische Rückansicht gegen das Vorsatzelement;

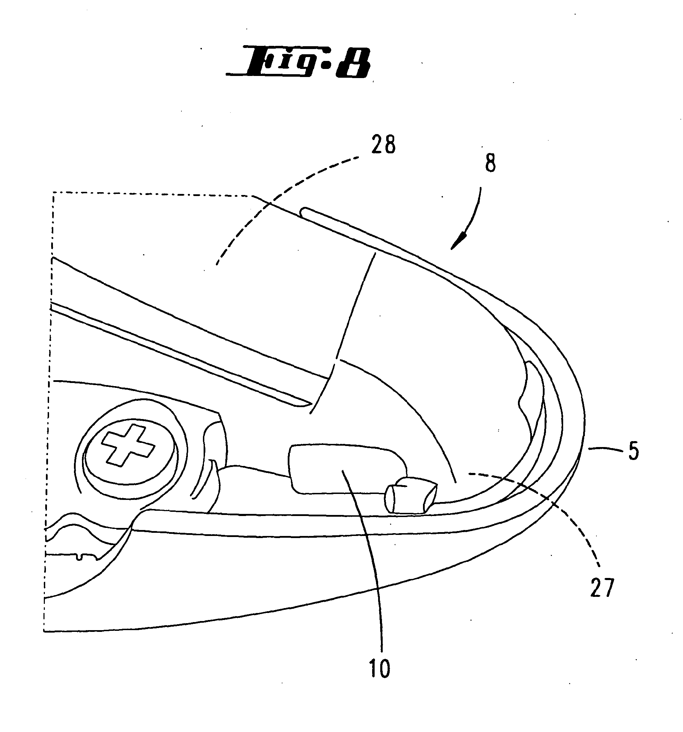

- Fig. 8: eine perspektivische Detaildarstellung, das vordere freie Ende des Vorsatzelementes betreffend;

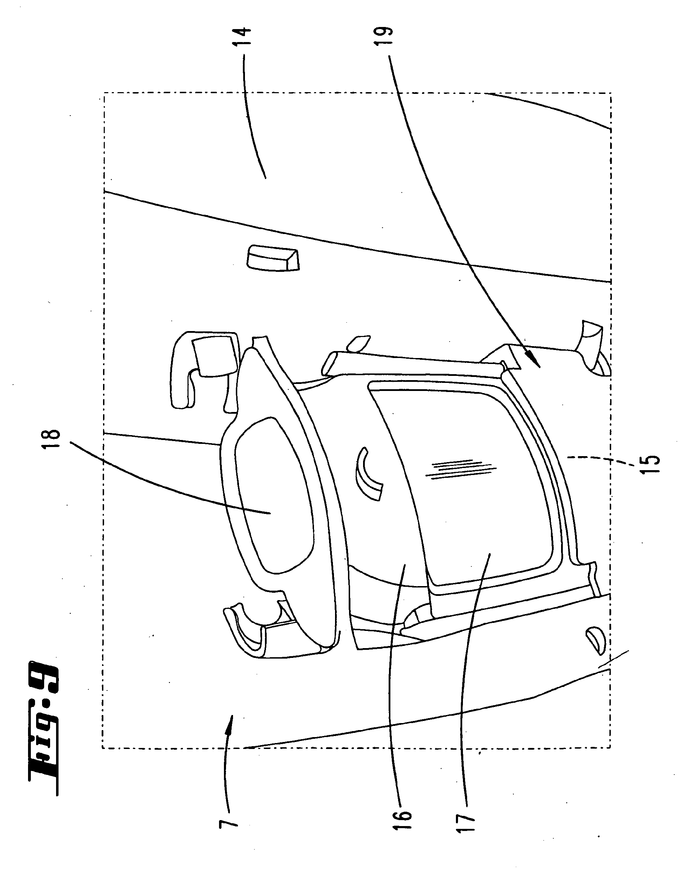

- Fig. 9: eine perspektivische Detaildarstellung des Motorteils, ein Verstelle- lement zur Verstellung der Saugöffnungsstellung des Saugkanales betreffend;

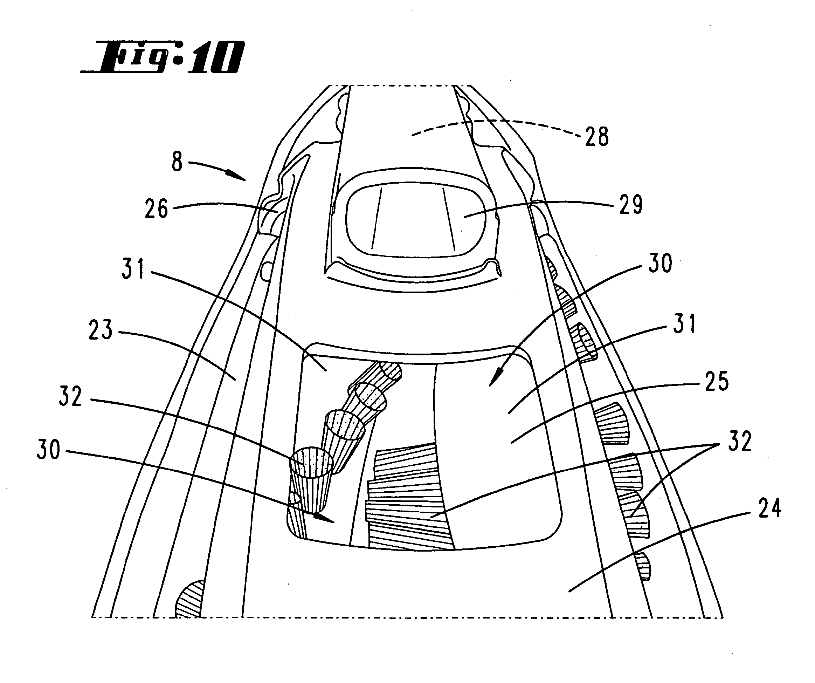

- Fig. 10: eine perspektivische Detaildarstellung des Vorsatzelements, den Be- reich der Saugöffnungen des Kanals betreffend;
- Fig. 11: den schematisch dargestellten Schnitt gemäß der Linie XI-XI in Fig. 2;
- Fig. 12: eine perspektivische Detaildarstellung, die Anordnung von Bürsten in dem Vorsatzelement und den Antrieb derselben betreffend;
- Fig. 13: den stark vergrößerten, schematisch dargestellten Schnitt gemäß der Linie XIII-XIII in Fig. 12.

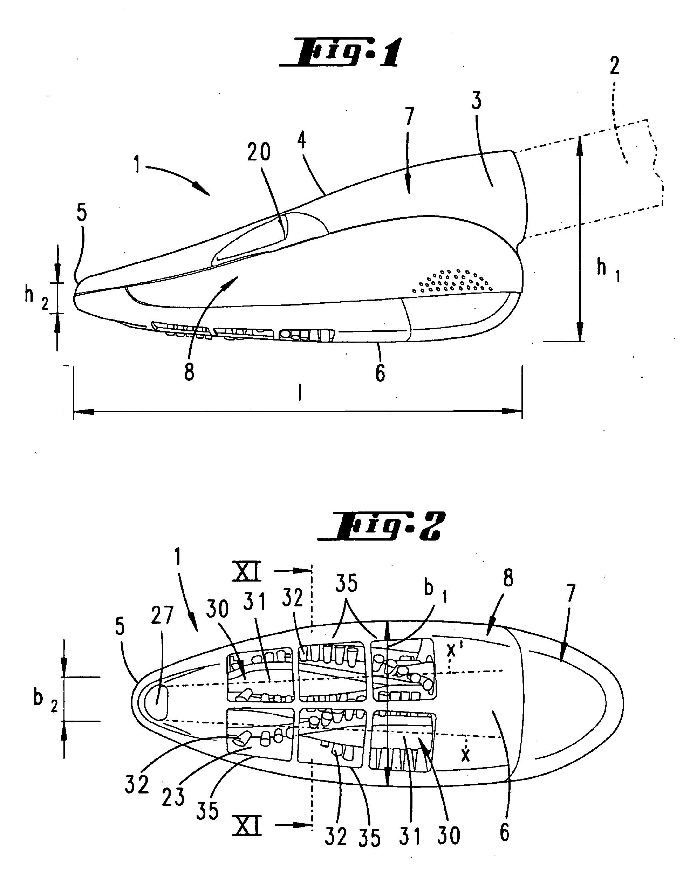

Dargestellt und beschrieben ist zunächst mit Bezug zu den Fig. 1 und 2 ein Reinigungsgerät 1 in Form eines von Hand führbaren Polsterreinigungsgeräts, welches über einen Saugschlauch 2 mit einem Staubsauger, insbesondere Haushaltsstaubsauger verbindbar ist. Über diesen Saugschlauch erfolgt der Abtransport des mittels des Reinigungsgerätes 1 aufgenommenen Schmutzes. Weiter ist über den Saugschlauch 2 auch eine elektrische Kontaktierung des Reinigungsgerätes 1 gegeben. Das dargestellte Reinigungsgerät 1 ist somit als Vorsatzgerät für einen Staubsauger ausgebildet.

Das Reinigungsgerät 1 weist insgesamt eine schuhartige oder schnabelartige Gestaltung auf, wobei sohlenseitig die Arbeitsfläche ausgebildet ist und fersenseitig der Anschluss des Saugschlauches 2 erfolgt, wozu an dem Reinigungsgerät 1 ein nicht näher dargestellter Sauganschlussstutzen 3 ausgeformt ist.

Die Gerätehöhe h₁ im rückwärtigen, fersenseitigen Bereich des Reinigungsgerätes 1 entspricht etwa dem Fünffachen der vorderen, spitzenseitigen Höhe h₂, wobei weiter die in Erstreckungsrichtung des Reinigungsgerätes 1 gemessene Länge 1 etwa dem 2- bis 2,5-fachen Wert der Höhe h₁ entspricht.

Der Geräterücken 4 verläuft von der Spitze 5 ausgehend nahezu gleichmäßig ansteigend bis in den Bereich des Anschlussstutzens 3. Die Gerätesohle 6 ist leicht konvex gekrümmt.

Wie aus der Unteransicht in Fig. 2 zu erkennen, ist der Grundriss des Reinigungsgerätes 1 oval ausgeformt mit einer mittleren größten Breite b₁, die etwa dem Vier- bis Fünffachen der Breite b₂ im Bereich der Spitze 5 entspricht. Zum rückwärtigen, zum Anschlussstutzen 3 hingewandten Ende ist die Sohle 6 im Vergleich zur Spitze 5 weniger stark gekrümmt verjüngt. Darüber hinaus entspricht die Breite b₂ im Bereich der Spitze 5 etwa der Höhe h₂ im selben Bereich.

Das Reinigungsgerät 1 ist zweigeteilt und weist einen Motorteil 7 und ein Vorsatzelement 8 auf, welch letzteres von dem Motorteil 7 trennbar ist. Bevorzugt ist das Vorsatzelement 8 an dem Motorteil 7 rastgehaltert, wozu das Motorteil 7, der Spitze 5 zugewandt, zwei Rastarme 9 aufweist, welche in entsprechend positionierte Rastöffnungen 10 des Vorsatzelementes 8 eintauchen. Im den Rastarmen 9 abgewandten Endbereich, d. h. im Bereich des Anschlussstutzens 3 sind in der Schnittstellenebene zwischen Motorteil und Vorsatzelement in dem Motorteil schlitzartige Eintrittsöffnungen 11 vorgesehen zum Eingreifen von entsprechend positionierten Zungen 12 des Vorsatzelementes 8, womit im Zuge eines Ansetzens des Vorsatzelementes 8 an dem Motorteil 7 die in die Eintrittsöffnungen 11 greifenden Zungen 12 scharnierartig wirken. Die Haltekräfte insbesondere der Rastarme 9 sind so dimensioniert, dass das Lösen des Vorsatzelementes 8 vom Motorteil 7 werkzeuglos erfolgen kann.

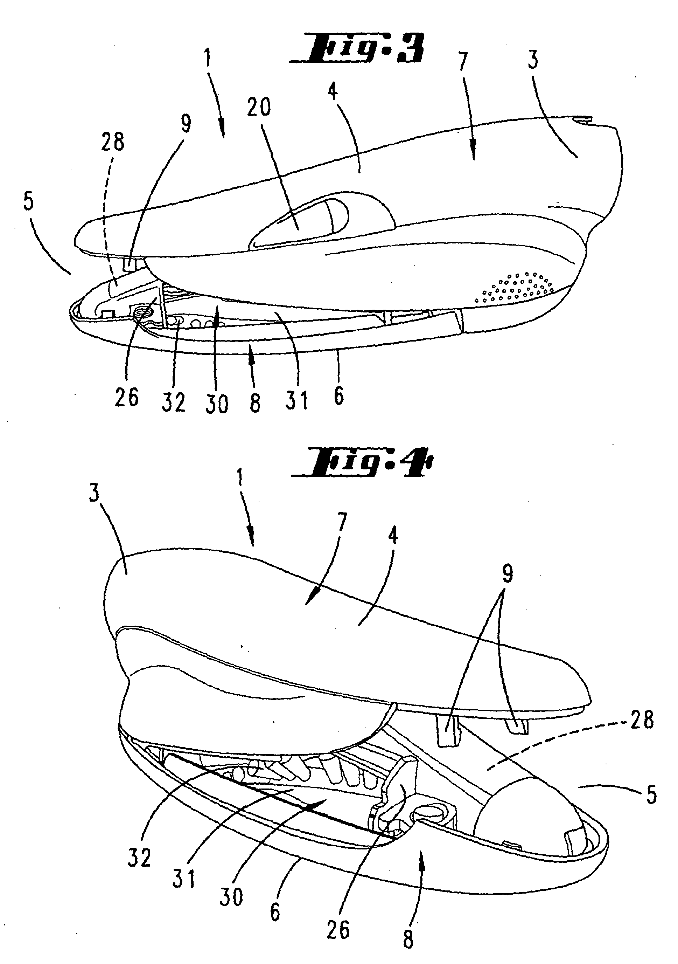

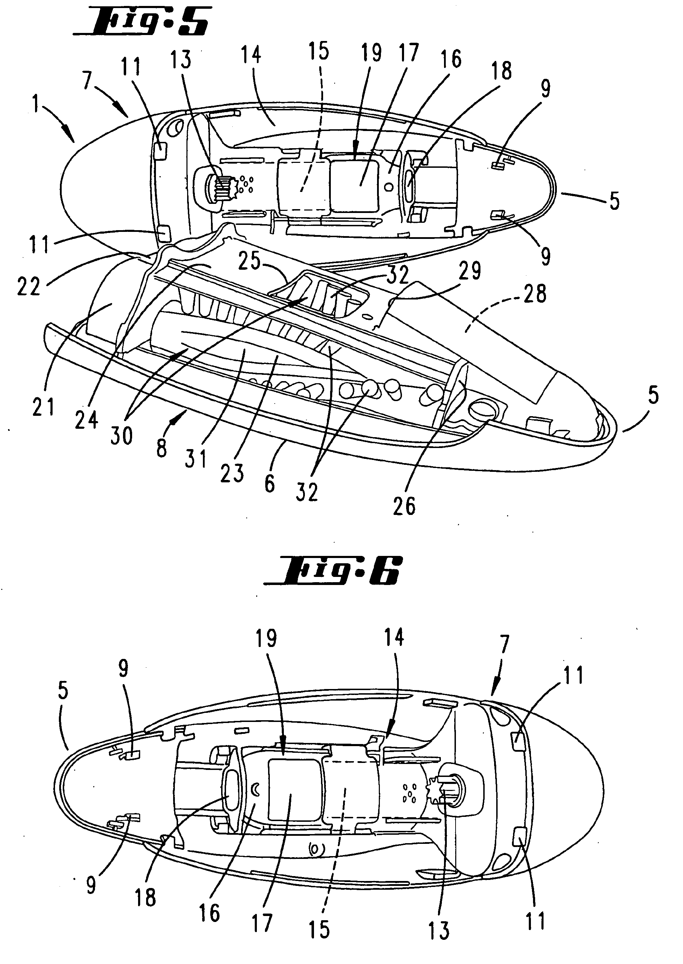

Wie weiter aus den Fig. 3 bis 5 zu erkennen, verläuft die Trennlinie zwischen Vorsatzelement 8 und Motorteil 7 nicht in einer Ebene, sondern ist vielmehr stufenartig versetzt ausgerichtet derart, dass die Gerätesohle 6 in Längserstrekkung des Gerätes 1 etwa zu vier Fünftel von dem Vorsatzelement 8 und über das weitere Fünftel im rückwärtigen, dem Anschlussstutzen 3 zugewandten Bereich durch das Motorteil 7 gebildet ist.

In dem Motorteil 7 ist ein nicht dargestellter Elektromotor mit einem Antriebszahnrad 13 angeordnet. Der Elektromotor ist hierbei im, dem Anschlussstutzen 3 zugewandten Endbereich des Geräts 1 bzw. des Motorteils 7 positioniert, wobei das auf der Motorwelle drehfest gehalterte Antriebszahnrad 13 in dem Vorsatzelement-Aufnahmeraum 14 frei auskragt, dies bei auf die Breitenerstrekkung des Geräts bezogener mittiger Anordnung des Antriebszahnrades 13.

Im Deckenbereich des Aufnahmeraumes 14, d. h. dem Rücken 4 des Gerätes 1 zugeordnet, ist ein Saugkanal 15 ausgeformt, welcher rückwärtig des Geräts in dem Anschlussstutzen 3 für den Saugschlauch 2 mündet. Anderendig mündet der Saugkanal 15 in einem Verteilerabschnitt 16, welch letzterer einen nach unten weisenden fensterartigen Durchbruch 17 und einen stirnseitigen, in Richtung auf die Spitze 5 weisenden weiteren Saugkanaldurchbruch 18 besitzt. Diese Durchbrüche 17 und 18 bilden Saugkanalschnittstellen für das Vorsatzelement 8 aus.

Der Verteilerabschnitt 16 ist als linear in Längserstreckung des Gerätes 1 geführtes Verstellelement 19 ausgebildet, welches sich in einen am Motorteil 7 außen angeordneten, bevorzugt daumenbetätigbaren Schieber 20 fortsetzt.

Das in dem dargestellten Ausführungsbeispiel vorgesehene Vorsatzelement 8 ist als Bürstenreinigungs-Funktionseinheit ausgeformt. Auf dem Sohlenabschnitt des Vorsatzelementes 8 ist in dem der Spitze 5 abgewandten Bereich zunächst ein Getriebekasten 21 vorgesehen. Dieser weist eine nach oben und rückwärtig sich öffnende fensterartige Durchbrechung 22 auf.

Jenseits des Getriebekastens 21 erstreckt sich in Richtung auf die Spitze 5 ein Saug-/Bürstraum 23, welcher überdeckt ist von einer Gehäusedecke 24 des Vorsatzelementes 8. Etwa mittig der Längserstreckung weist die Gehäusedecke 24 eine zum Saug-/Bürstraum 23 hin geöffnete Durchbrechung 25 auf. Querschnittsmäßig ist die Gehäusedecke 24 konkav, angepasst an die konvexe Querschnittsausgestaltung des motorteilseitigen Verstellelementes 19, ausgeformt.

Bodenseitig ist der Saug-/Bürstraum 23 begrenzt durch die Sohle 6. Die seitliche Abschirmung des Saug-/Bürstraumes 23 ist nach Anordnung des Vorsatzelementes 8 an dem Motorteil 7 durch Gehäuseseitenabschnitte des Motorteiles 7 erreicht.

Mit Abstand zum durch eine Trennwand 26 in Richtung auf die Spitze 5 begrenzten Saug-/Bürstraum 23 ist im Sohlenbereich, der Spitze 5 zugeordnet, eine Saugöffnung 27 vorgesehen, welche in strömungsmäßigem Anschluss steht mit einem dem Verlauf des Geräterückens 4 angepassten Saugkanalabschnitt 28. Dieser Saugkanalabschnitt 28 ist demnach von der Spitze 5 ausgehend ansteigend in Richtung auf die Gerätemitte ausgerichtet, wobei eine rückwärtige Saugkanalabschnitt-Öffnung 29 mit Abstand vor dem Durchbruch 25 der Gehäusedecke 24 positioniert ist.

In dem Saug-/Bürstraum 23 sind des Weiteren zwei als rotierende Bürsten 30 ausgebildete Reinigungselemente vorgesehen, wobei die Anordnung so gewählt ist, dass die Bürsten 30 in Nebeneinanderlage sich im Wesentlichen in Längsrichtung des Gerätes bzw. des Vorsatzelementes 8 erstrecken.

Die Bürsten 30 weisen jeweils eine Welle 31 auf, auf welcher zwei um 180° versetzt angeordnete Borstenreihen 32 angeordnet sind. Letztere erstrecken sich in Längsrichtung der Welle 31 schraubenförmig unter Einschließung eines Winkels von etwa 180°. Die Borsten der Borstenreihen 32 sind radial nach außen gerichtet.

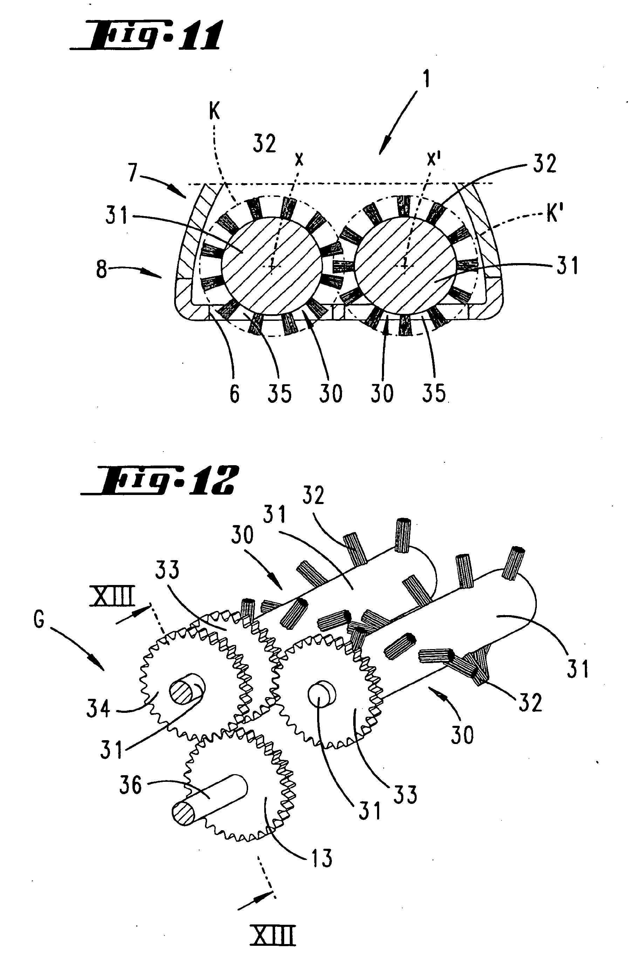

Die Wellen 31 der Bürsten 30 sind einerends im Bereich der Trennwand 26 und anderenends im Getriebekasten 21 gelagert. Die in den Getriebekasten 21 einragenden Enden der Wellen 31 sind mit miteinander kämmenden Zahnrädern 33 versehen. Wie insbesondere aus der Detaildarstellung in Fig. 12 zu erkennen, ist eine der beiden Bürstenwellen 31 -dargestellt die linke Welle- mit einem weiteren Abtriebszahnrad 34 versehen, welches drehfest mit dem Zahnrad 33 und der Welle 31 verbunden ist.

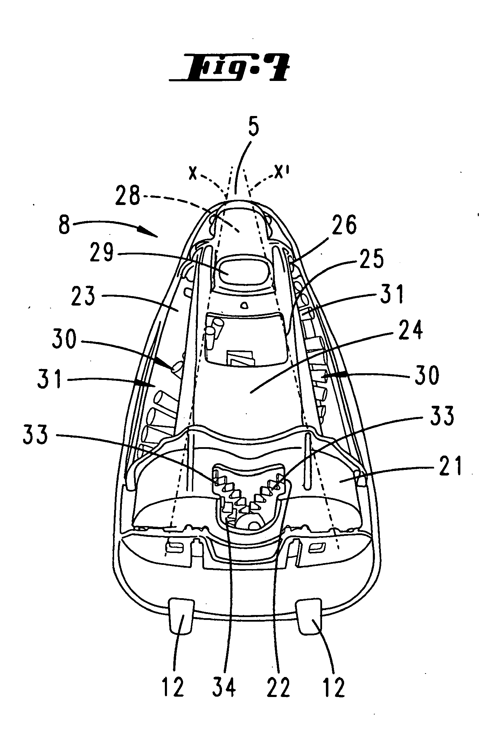

Wie weiter insbesondere aus den Darstellungen in den Fig. 2 und 7 zu erkennen, sind die Bürsten 30 so positioniert, dass deren Achsen x, x' zueinander V-förmig angeordnet sind, wobei die Bürsten 30 im Bereich des vorderen freien Endes, d. h. der Spitze 5 zugewandt, näher zueinander liegen als im rückwärtigen Getriebekastenbereich.

Die Sohle 6 ist durchbrochen von mehreren -in dem Ausführungsbeispiel sechs-Öffnungen 35, welche in dem Saug-/Bürstraum 23 münden. Durch diese Öffnungen 35 tauchen Endabschnitte der Borstenreihen 32 der Bürsten 30. Darüber hinaus ist durch die Öffnungen 35 eine Absaugung ermöglicht. Die Bürsten 30 werden gegensinnig zueinander angetrieben, wobei die Hüllkreise k, k' der rotierenden Borstenreihen 32 sich überdecken (vergl. Fig. 11). Der Antrieb der Bürsten 30 ist hierbei so gewählt, dass die Borstenreihen 32 Schmutz von außen nach innen in den Bereich zwischen den beiden Bürsten 30 transportieren.

Durch die Zweiteilung des Reinigungsgerätes 1 ist ein klarer Aufbau gegeben. Durch Anordnung des dargestellten Vorsatzelementes 8 an das Motorteil 7 ist ein Polsterreinigungsgerät mit rotierenden Bürsten 30 und Absaugung geschaffen. Im zusammengesetzten Zustand greift das Antriebszahnrad 13, die Durchbrechung 22 des Getriebekastens 21 durchtretend, an dem Abtriebszahnrad 34 der einen Bürste 30 ein, womit diese Bürste 30 unmittelbar und die weitere Bürste 30 mittelbar über den Elektromotor angetrieben werden.

Über den Schieber 20 ist die Verstellung des motorteilseitigen Verstellelementes 19 ermöglicht, wodurch die Durchbrüche 17,18 des Verteilerabschnittes 16 wahlweise der vorsatzelementseitigen, in der Gehäusedecke 24 vorgesehenen Durchbrechung 25 und/oder der Saugkanalabschnitt-Öffnung 29 des vorsatzelementseitigen Saugkanalabschnittes 28 zugeordnet werden. Demzufolge ist eine wahlweise Absaugung im Sohlenbereich und/oder im Spitzenbereich durch die Saugöffnung 27 voreinstellbar.

Andere Vorsatzelemente können bspw. zum Polieren benutzt werden, wobei hierbei die Saugkanaldurchbrechungen 17,18 im Verteilerabschnitt 16 durch eine Gehäusedecke dieses Vorsatzelementes 8 verschlossen werden. Weiter ist auch ein reines Absaug-Vorsatzgerät denkbar, bei welchem auch wahlweise zwischen einer Flächen- und einer Spitzenabsaugung durch Betätigung des Schiebers 20 gewählt werden kann. Diesbezüglich ist es auch denkbar, bei einer derartigen Nutzung den in dem Reinigungsgerät 1 bzw. in dem Motorteil 7 angeordneten Elektromotor auszuschalten.

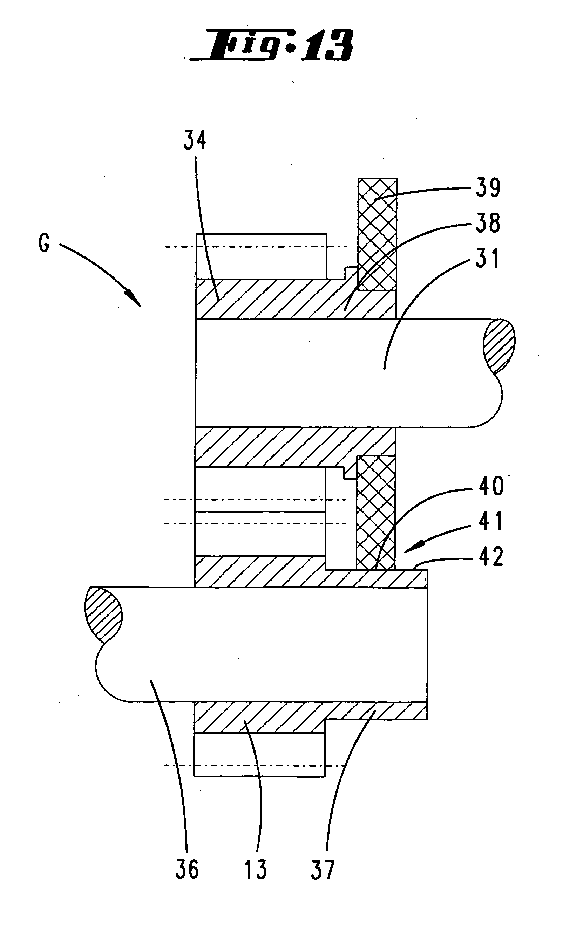

In Fig. 13 ist eine schematische Darstellung der Getriebeanordnung zwischen Antriebszahnrad 13 des Motorteils 7 und Abtriebszahnrad 34 der vorsatzelementseitigen Bürste 30 dargestellt. Sowohl das Antriebszahnrad 13 als auch das Abtriebszahnrad 34 sind auf der jeweiligen Welle (Motorwelle 36 bzw. Bürstenwelle 31) drehfest gehaltert, wobei das Antriebszahnrad 13 in axialer Verlängerung der Motorwelle 36 einen einstückig mit diesem ausgeformten Ringkragen 37 besitzt.

Auf dem Abtriebszahnrad 34 ist ein, in dieselbe Richtung wie der Ringkragen 37 weisender zylinderförmiger Bereich 38 integriert, auf welchem ein Reibrad 39 drehfest befestigt ist. Letzteres ist bevorzugt ein Schaumstoffteil, ein Elastomerteil oder ein Gummiteil.

Bevorzugt ist die äußere Ring-Oberfläche des Reibrades 39 eben und glatt. Mit dieser Oberfläche 40 wirkt das Reibrad 39 mit dem Ringkragen 37 des Antriebszahnrades 13 zusammen, zur Bildung einer Reibradpaarung 41, wobei der zylinderförmige Bereich 38 eine Gegenlauffläche für das Reibrad 39 ausformt.

Zufolge dieser erfindungsgemäßen Ausgestaltung des Getriebes werden Drehschwingungen wirksam gedämpft, welche durch den Bürsteneingriff und durch Zufolge dieser erfindungsgemäßen Ausgestaltung des Getriebes werden Drehschwingungen wirksam gedämpft, welche durch den Bürsteneingriff und durch ein ungleichmäßiges Drehmoment des Elektromotors verursacht werden. Weiter ist in vorteilhafter Weise das Reibrad 39 auf dem abtrennbaren Element des Reinigungsgerätes 1, also im Vorsatzelement 8 angeordnet, welches Vorsatzelement 8 ohnehin einem höheren Verschleiß unterliegt und austauschbar ist.

Gegenstand der Erfindung ist auch ein Reinigungsgerät, bei welchem die Bürsten 30 zugeordnet dem vorderen freien Ende des Reinigungsgeräts 1 näher zueinander liegen.

Gegenstand der Erfindung ist auch ein Reinigungsgerät, bei welchem die Bürsten 30 freistehende, sich im Wesentlichen in Längsrichtung der Bürsten erstreckende Borstenreihen 32 aufweisen und dass Hüllkreise k, k' der rotierenden Borstenreihen 32 beider Bürsten 30 sich überdecken.

Gegenstand der Erfindung ist auch ein Reinigungsgerät, bei welchem die Bürsten 30 fußseitig, zugeordnet dem Elektroantrieb, über Zahnräder 33 miteinander kämmen.

Gegenstand der Erfindung ist auch ein Reinigungsgerät, bei welchem der Elektroantrieb nur auf eine der Bürsten 30 unmittelbar einwirkt.

Gegenstand der Erfindung ist auch ein Reinigungsgerät, bei welchem auf der Unterseite des Reinigungsgeräts 1, zugeordnet zu den Bürsten 30, eine oder mehrere Öffnungen 35 ausgebildet sind, durch welche sich jedenfalls Borsten der Bürsten 30 erstrecken und die Absaugung ermöglicht ist.

Gegenstand der Erfindung ist auch ein Reinigungsgerät, bei welchem das Reinigungsgerät 1 insgesamt eine schuhartige Gestaltung aufweist.

Gegenstand der Erfindung ist auch ein Reinigungsgerät, bei welchem der sich über das Reinigungsgerät 1 erstreckende Saugkanal 15 jedenfalls teilweise in dem Vorsatzelement 8 ausgebildet ist.

Gegenstand der Erfindung ist auch ein Reinigungsgerät, bei welchem in dem Motorteil 7 ein Verstellelement 19 angeordnet ist, zur Verstellung der Stellung der Saugöffnung des Saugkanals 15.

Gegenstand der Erfindung, ist auch ein Reinigungsgerät, bei welchem das Verstellelement 19 sich in einen am Motorteil 7 außen angeordneten Schieber 20 fortsetzt.

Gegenstand der Erfindung ist auch ein Reinigungsgerät, bei welchem das Motorteil 7 und das Vorsatzelement 8 miteinander rastverbunden sind.

Gegenstand der Erfindung ist auch ein Reinigungsgerät, bei welchem auf dem Abtriebszahnrad 34 ein Reibrad 39 angeordnet ist, zur zusätzlichen Zusammenwirkung mit dem Antriebszahnrad 13.

Gegenstand der Erfindung ist auch ein Reinigungsgerät, bei welchem das Reibrad 39 ein Schaumstoffteil ist.

Gegenstand der Erfindung ist auch ein Reinigungsgerät, bei welchem das Reibrad 39 ein Elastomerteil ist.

Gegenstand der Erfindung ist auch ein Reinigungsgerät, bei welchem das Reibrad 39 in Achsrichtung formschlüssig gehalten ist.

Gegenstand der Erfindung ist auch ein Reinigungsgerät, bei welchem das Reibrad 39 an dem einen Zahnrad 30 angespritzt ist.

Gegenstand der Erfindung ist auch ein Reinigungsgerät, bei welchem der Abstand der Achsen x, x' der An- und Abtriebswellen Motorwelle 36, Bürstenwelle 31 federbar eingestellt ist.

## Patentansprüche

1. Polsterreinigungsgerät, das mit einem Saugschlauch (2) zu verbinden ist und in Erstreckungsrichtung des Saugschlauchs (2) langgestreckt ausgebildet ist, wobei ein angetriebenes Reinigungselement sich in Längsrichtung des Gerätes (1) erstreckt, **dadurch gekennzeichnet, dass** das Reinigungsgerät (1) eine Zweiteilung aufweist, wobei ein Teil (7) den Elektromotor mit einem Antriebszahnrad (13) und das andere Teil ein hiervon abkuppelbares Vorsatzelement (8) umfasst, in welchem sich das über ein Abtriebszahnrad (34) antreibbare Reinigungselement befindet.

2. Reinigungsgerät nach Anspruch 1, **gekennzeichnet durch** zwei als rotierende Bürsten (30) ausgebildete Reinigungselemente, die sich zueinander gegensinnig bewegen.

3. Reinigungsgerät nach einem der vorhergehenden Ansprüche, **dadurch gekennzeichnet, dass** die Bürsten (30) zugeordnet dem vorderen freien Ende des Reinigungsgeräts (1) näher zueinander liegen.

4. Reinigungsgerät nach einem der vorhergehenden Ansprüche, **dadurch gekennzeichnet, dass** die Bürsten (30) freistehende, sich im Wesentlichen in Längsrichtung der Bürsten erstreckende Borstenreihen (32) aufweisen und dass Hüllkreise (k, k') der rotierenden Borstenreihen (32) beider Bürsten (30) sich überdecken.

5. Reinigungsgerät nach einem der vorhergehenden Ansprüche, **dadurch gekennzeichnet, dass** der Elektroantrieb nur auf eine der Bürsten (30) unmittelbar einwirkt.

6. Reinigungsgerät nach einem der vorhergehenden Ansprüche, **dadurch gekennzeichnet, dass** sich oberhalb der Bürsten (30) und in Längsrichtung der Bürsten (30) ein im Bereich eines freien Endes des Reinigungsgeräts (1) mündender Saugkanal (15) erstreckt.

7. Reinigungsgerät nach einem der vorhergehenden Ansprüche, **dadurch gekennzeichnet, dass** in einem freien Ende des Reinigungsgeräts (1) jenseits der Bürsten (30) eine nach unten geöffnete Saugöffnung (27) ausgebildet ist.

8. Reinigungsgerät nach einem der Ansprüche 6 oder 7, **dadurch gekennzeichnet, dass** der Saugkanal (15) im Bereich der Bürsten (30) verschließbar ist.

9. Reinigungsgerät nach einem der vorhergehenden Ansprüche, **dadurch gekennzeichnet, dass** auf der Unterseite des Reinigungsgeräts (1), zugeordnet zu den Bürsten (30), eine oder mehrere Öffnungen (35) ausgebildet sind, durch welche sich jedenfalls Borsten der Bürsten (30) erstrecken und die Absaugung ermöglicht ist.

10. Reinigungsgerät nach einem vorhergehenden Ansprüche, **dadurch gekennzeichnet, dass** das Reinigungsgerät (1) insgesamt eine schuhartige Gestaltung aufweist.

11. Reinigungsgerät nach einem der vorhergehenden Ansprüche, **dadurch gekennzeichnet, dass** in dem Motorteil (7) ein Verstellelement (19) angeordnet ist, zur Verstellung der Stellung der Saugöffnung des Saugkanals (15).

12. Reinigungsgerät nach einem der vorhergehenden Ansprüche, **dadurch gekennzeichnet, dass** das Motorteil (7) und das Vorsatzelement (8) miteinander rastverbunden sind.

13. Reinigungsgerät nach einem der vorhergehenden Ansprüche, **dadurch gekennzeichnet, dass** auf dem Abtriebszahnrad (34) ein Reibrad (39) angeordnet ist, zur zusätzlichen Zusammenwirkung mit dem Antriebszahnrad (13).

14. Reinigungsgerät nach Anspruch 13, **dadurch gekennzeichnet, dass** das Reibrad (39) in Achsrichtung formschlüssig gehalten ist oder an dem Zahnrad (30) angespritzt ist.

15. Reinigungsgerät nach einem der vorhergehenden Ansprüche, **dadurch gekennzeichnet, dass** der Abstand der Achsen (x, x') der An- und Abtriebswellen (Motorwelle 36, Bürstenwelle 31) federbar eingestellt ist.

## Claims

1. Upholstery cleaning device which can be connected to a suction hose (2) and is elongate in the direction of extent of the suction hose (2), a driven cleaning element extending in the longitudinal direction of the device (1), **characterized in that** the cleaning device (1) is divided into two, one part (7) comprising the electric motor with a driving gearwheel (13) and the other part comprising an attachment element (8), which can be uncoupled from the one part and in which the cleaning element that can be driven by means of a driven gearwheel (34) is located.

2. Cleaning device according to Claim 1, **characterized by** two cleaning elements formed as rotating brushes (30) and moving in opposite directions.

3. Cleaning device according to one of the preceding claims, **characterized in that** the brushes (30) lie closer together where they are associated with the front free end of the cleaning device (1).

4. Cleaning device according to one of the preceding claims, **characterized in that** the brushes (30) have rows of bristles (32), that are free-standing and extend substantially in the longitudinal direction of the brushes, and **in that** enveloping circles (k, k') of the rotating rows of bristles (32) of the two brushes (30) overlap.

5. Cleaning device according to one of the preceding claims, **characterized in that** the electric drive acts directly only on one of the brushes (30).

6. Cleaning device according to one of the preceding claims, **characterized in that** a suction channel (15) that opens out in the region of a free end of the cleaning device (1) extends above the brushes (30) and in the longitudinal direction of the brushes (30).

7. Cleaning device according to one of the preceding claims, **characterized in that** a downwardly open suction opening (27) is formed in a free end of the cleaning device (1) beyond the brushes (30).

8. Cleaning device according to either of Claims 6 and 7, **characterized in that** the suction channel (15) can be closed in the region of the brushes (30).

9. Cleaning device according to one of the preceding claims, **characterized in that** on the underside of the cleaning device (1) and associated with the brushes (30) there are one or more openings (35), through which at least bristles of the brushes (30) extend, and suction removal is made possible.

10. Cleaning device according to one of the preceding claims, **characterized in that** the cleaning device (1) as a whole has a shoe-like shape.

11. Cleaning device according to one of the preceding claims, **characterized in that** an adjusting element (19) for adjusting the position of the suction opening of the suction channel (15) is disposed in the motor part (7).

12. Cleaning device according to one of the preceding claims, **characterized in that** the motor part (7) and the attachment element (8) are connected to each other in a latching manner.

13. Cleaning device according to one of the preceding claims, **characterized in that** a friction wheel (39) is disposed on the driven gearwheel (34) for additional interaction with the driving gearwheel (13).

14. Cleaning device according to Claim 13, **characterized in that** the friction wheel (39) is held with a form fit in the axial direction or is moulded on the gearwheel (30).

15. Cleaning device according to one of the preceding claims, **characterized in that** the spacing between the axes (x, x') of the driving and driven shafts (motor shaft 36, brush shaft 31) is resiliently set.

## Revendications

1. Appareil de nettoyage de capitonnage, à relier à un tuyau d'aspiration (2) et de configuration allongée, en observant dans la direction d'étendue du tuyau d'aspiration (2), un élément de nettoyage entraîné s'étendant dans la direction longitudinale de l'appareil (1), **caractérisé en ce que** l'élément de nettoyage (1) présente une division en deux, une partie (7) comprenant le moteur électrique avec une roue dentée menante (13) et l'autre partie comprenant un élément adaptateur (8) désaccouplable de celui-ci, dans lequel les trouve l'élément de nettoyage susceptible d'être entraîné par l'intermédiaire d'une roue dentée menée (34).

2. Appareil de nettoyage selon la revendication 1, **caractérisé par** deux éléments de nettoyage réalisés sous forme de brosses (30) tournantes, soumises à un mouvement en sens inverse l'une de l'autre.

3. Appareil de nettoyage selon l'une des revendications précédentes, **caractérisé en ce que** les brosses (30) associées à l'extrémité libre avant de l'appareil de nettoyage (1) sont situées plus près les unes des autres.

4. Appareil de nettoyage selon l'une des revendications précédentes, **caractérisé en ce que** les brosses (30) présentent des rangées de poils (32) libres, s'étendant sensiblement dans la direction longitudinale des brosses, et des cercles enveloppes (k, k') des rangées de poils (32) rotatives des deux brosses (30) se recouvrent.

5. Appareil de nettoyage selon l'une des revendications précédentes, **caractérisé en ce que** l'entraînement électrique n'agit directement que sur l'une des brosses (30).

6. Appareil de nettoyage selon l'une des revendications précédentes, **caractérisé en ce qu'**un canal d'aspiration (15), débouchant dans la zone d'une extrémité libre de l'appareil de nettoyage (1), s'étend au-dessus des brosses (30) et dans la direction longitudinale des brosses (30).

7. Appareil de nettoyage selon l'une des revendications précédentes, **caractérisé en ce qu'**une ouverture d'aspiration (27), ouverte vers le bas, est réalisée dans une extrémité libre de l'appareil de nettoyage (1), de l'autre côté des brosses (30).

8. Appareil de nettoyage selon l'une quelconque des revendications 6 ou 7, **caractérisé en ce que** le canal d'aspiration (15) est obturable dans la zone des brosses (30).

9. Appareil de nettoyage selon l'une des revendications précédentes, **caractérisé en ce que**, sur la face inférieure de l'appareil de nettoyage (1), en association aux brosses (30), sont réalisées une ou plusieurs ouvertures (35) à travers lesquelles en tout cas s'étendent des poils des brosses (30) et permettant que l'aspiration se produise.

10. Appareil de nettoyage selon l'une des revendications précédentes, **caractérisé en ce que** l'appareil de nettoyage (1) présente globalement une configuration en chaussure.

11. Appareil de nettoyage selon l'une des revendications précédentes, **caractérisé en ce que** dans la partie moteur (7) est disposé un élément de manoeuvre (19), pour la manoeuvre de réglage de l'ouverture d'aspiration du canal d'aspiration (15).

12. Appareil de nettoyage selon l'une des revendications précédentes, **caractérisé en ce que** la partie moteur (7) et l'élément adaptateur (8) sont reliés ensemble avec encliquetage.

13. Appareil de nettoyage selon l'une des revendications précédentes, **caractérisé en ce que** sur la roue dentée menée (34) est disposée une roue à friction (39), pour coopération supplémentaire avec la roue dentée menante (13).

14. Appareil de nettoyage selon la revendication 13, **caractérisé en ce que** la roue à friction (39) est maintenue en direction axiale par une liaison à ajustement de forme, ou surmoulée par injection sur la roue dentée (30).

15. Appareil de nettoyage selon l'une des revendications précédentes, **caractérisé en ce que** l'espacement des axes (x, x') des arbres menant et mené (arbre moteur 36, arbre à brosse 31) est réglable élastiquement.
